# EUROPÄISCHE PATENTSCHRIFT

(11) **EP 0 416 229 B1**
(45) Veröffentlichungstag und Bekanntmachung des Hinweises auf die Patenterteilung: **18.05.1994**
(21) Anmeldenummer: 90112011.3
(22) Anmeldetag: 25.06.1990
(51) Int. Cl.: C08J 9/12, C08J 9/02, C09K 3/10

(54) **Verfahren zum Herstellen eines feinporigen, weich-elastischen Dichtungsschaumes für Deckel- und Gehäusedichtungen**
Process for preparing a soft elastic sealing foam with fine pores for sealing covers and casings
Procédé pour préparer une mousse d'étanchéité molle élastique à pores fins pour garnitures de couvercles et de boîtiers

(30) Priorität: 01.09.1989 DE 3929081
(43) Veröffentlichungstag der Anmeldung: 13.03.1991
(73) Patentinhaber: ERNST SONDERHOFF GmbH & Co. KG, D-50827 Köln (DE)
(72) Erfinder: Giesen, Franz-Josef, D-5010 Bergheim (DE)
(74) Vertreter: Vollbach, Hans, Dipl.-Ing.

(56) Entgegenhaltungen:
- EP-A- 0 223 408
- CH-A- 385 174
- DE-A- 1 457 182
- FR-A- 2 263 255
- FR-A- 2 419 962

## Beschreibung

Die Erfindung betrifft ein Verfahren zum Herstellen eines feinporigen, weich-elastischen Silicon-Dichtungsschaumes mit hohem Rückfederungsvermögen für Deckel- und Gehäusedichtungen, entsprechend der im Oberbegriff des Patentanspruches 1 angegebenen Art.

Für Deckel- und Gehäusedichtungen sowie für sonstige Dichtungszwecke werden in der Praxis vielfach Polyurethanschäume eingesetzt, deren Verarbeitung in großtechnischem Maßstab mit Hilfe einer Niederdruck-Zweikomponenten-Misch- und Dosieranlage erfolgt, bei der die Reaktionskomponenten beim Durchgang durch einen axialen Mischkanal mit Hilfe eines mit hoher Drehzahl rotierenden Mischorganes des Mischkopfes innig vermischt werden. Dabei wird das Schaumstoff-Reaktionsgemisch drucklos auf den Dichtungssitz od.dgl. aufgebracht, wo es sich ohne Wärmezuführung in nur wenigen Minuten zu einem hochwertigen Polyurethan-Weichschaum verfestigt. Polyurethan-Dichtungsmassen haben aufgrund der günstigen Herstellungskosten, der leichten Verarbeitung und der guten Dichteigenschaften eine weite Verbreitung in der Praxis gefunden. Sie werden bevorzugt für Deckeldichtungen in der Emballagenindustrie und für Gehäusedichtungen, z.B. in der Elektroindustrie, eingesetzt (DE-B-15 94 266).

Dem Einsatz der vorgenannten Polyurethan-Dichtungsmassen sind jedoch vor allem im Bezug auf ihre Temperaturbeständigkeit und ihre Beständigkeit gegenüber chemischen Einflüssen Grenzen gesetzt. Es gilt daher, einen hochwertigen Dichtungsschaum zu finden, der die guten Verarbeitungs- und Dichteigenschaften der Polyurethandichtungen mit der Möglichkeit eines breiteren Einsatzbereiches verbindet und der vor allem die hohen Anforderungen erfüllt, wie sie an Deckel- und Gehäusedichtungen u.dgl. gestellt werden.

Es ist in der Technik seit langem bekannt, für Dichtungs- oder Isolierzwecke Siliconschäume einzusetzen, deren Reaktionskomponenten unter Verwendung von Mischvorrichtungen vermischt und anschließend zur Aufschäumung gebracht werden. Dies erfolgt im Stand der Technik z.B. in der Weise, daß eine Siliconmasse, bestehend aus einen Silicon-Polymer mit mindestens zwei Vinylgruppen, aus einem hochaktiven Platinkomplex als Katalysator und aus sonstigen Zusätzen, wie Füll-, Verstärkungs-, Verdickungsmittel, Farbstoffe, Haftverbesserungsmittel, Alterungsschutzmittel u.dgl. unter Verwendung von Wasserstoffsiloxan (SiH) als Vernetzerkomponente sowie ggf. Wasser zur Aufschäumung gebracht wird. Bei diesen Verfahren erfolgt die Verschäumung im allgemeinen bei höheren Temperaturen. Bei einem bekannten Verfahren werden Siliconschäume auf der Basis von platinkatalysierten und in der Wärme härtbaren Organopolysiloxanmassen hergestellt, wobei die vernetzungsfähige Masse, ggf. im Gemisch mit inerten Treibmitteln, mit einer hydroxylgruppenhaltigen Substanz verschäumt wird (DE-A-34 43 677, FR-A-2 419 962). Die bekannten Verfahren beruhen auf der Feststellung, daß platinkatalysierte Additionssysteme, die vinylhaltige Siloxane, ggf. hydrophobierte Füllstoffe und spezielle Hydrogensiloxane enthalten, mit hydroxylgruppenhaltigen Substanzen, wie Alkoholen und/oder Wasser, physikalisch geschäumt werden können. Die Verschäumung erfolgt bei Temperaturen zwischen 50° und 150° C oder auch unter Raumtemperatur. Eine Verschäumung unter Raumtemperaturen führt nicht zuverlässig zu einem Siliconschaum, der den hohen Anforderungen entspricht, die z.B. bei Deckel- und Gehäusedichtungen an Dichtungsschäume gestellt werden. Bei Raumtemperaturen um etwa 20°C würden die additionsvernetzenden, wassergetriebenen Siliconschäume nur äußerst langsam reagieren. Andererseits genügen die bekannten Siliconschäume, die bei Raumtemperatur vernetzen, nicht den hohen Anforderungen der Dichtungstechnik im Hinblick auf Rückfederungsverhalten, Dichtheit durch Feinporigkeit, Geschlossenzelligkeit und Zellgleichheit bei hoher mechanischer Festigkeit. Siliconschäume, die bei Raumtemperatur vernetzen, versagen hinsichtlich Vernetzung und Aufschäumung jedenfalls dann, wenn sie in situ, also am Sitz der Dichtung, z.B. in einer Dichtungsnut, zur Aufschäumung gebracht werden, da die die Dichtung tragenden Deckel, Gehäuse oder sonstigen Bauteile zumeist aus einem die Wärme rasch ableitenden Metallwerkstoff bestehen. Aus den genannten Gründen war es daher nicht möglich, hochwertige Silicon-Schaumstoffdichtungen in situ, also am Sitz der Dichtung, zuverlässig herzustellen.

Aufgabe der Erfindung ist es, das gattungsgemäße Verfahren bei einfacher Verarbeitungstechnik so auszugestalten, daß sich mit ihm für Dichtungszwecke geeignete hochwertige weich-elastische Silicon-Schaumstoffdichtungen ohne Wärmezufuhr, d.h. bei normalen Raumtemperaturen (15° bis 25°C) im Niederdruck-Freiverschäumungsverfahren erreichen lassen. Dabei sollen mit dem erfindungsgemäßen Verfahren Silicon-Schaumstoffdichtungen in situ hergestellt werden, die sich vor allem durch gutes elastisches Rückverformungsvermögen, gleichmäßige mikrofeine Zellstruktur, Alterungsbeständigkeit sowie gute Temperatur- und Chemikalienbeständigkeit auszeichnen.

Die vorgenannte Aufgabe wird erfindungsgemäß mit den im Kennzeichen des Patentanspruches 1 angegebenen Verfahrensmerkmalen gelöst.

Überraschenderweise wurde gefunden, daß sich äußerst hochwertige Siliconschaumstoffdichtungen in situ ohne Wärmezufuhr, also unter normalen Raumtemperaturen erreichen lassen, wenn einerseits der Wasserzusatz zu dem Reaktionsgemisch auf höchstens 2 Gew.-%, bezogen auf die Menge an Silicon-Polymer, begrenzt und andererseits das aus den beiden genannten Komponenten bestehende spezifische Reaktionsgemisch mit Hilfe der für die Polyurethan-Schaumstoffdichtungen gebräuchlichen Niederdruck-Zweikomponenten-Misch- und Dosieranlagen verarbeitet wird, deren Mischkopf ein in einem engen Mischkanal mit hoher Geschwindigkeit rotierendes Mischorgan aufweist, wobei die Drehzahl des Mischorganes bei 3000 bis 8000 U/min. liegt und der axial durch den Mischkopf hindurchführende Mischkanal im Querschnitt so eingestellt ist, daß der Durchgangsspalt zwischen der Kanalwandung und dem axial im Mischkanal rotierenden Mischorgan äußerst eng bemessen ist, d.h. bei 0,5 bis 3 mm liegt. Aufgrund der hohen Drehzahl des axial im Mischkanal rotierenden Mischorganes und des engen Durchflußspaltes am Umfang des rotierenden Mischorganes werden die genannten Komponenten der Siliconmasse bei hoher Fliehkraft besonders durchgreifend und innig vermischt, wobei unter den einwirkenden Kräften die Komponenten in engen räumlichen Kontakt zueinander gebracht werden. Dieser Effekt führt zu einer intensiven und praktisch vollständigen Reaktion der Siliconmasse. Dabei kommt es durch die Reibung an dem rasch rotierenden Mischorgan zur partiellen Erwärmung der Siliconmasse. Diese dient zusätzlich als Kicker, d.h. als Reaktionsstarthilfe für den Schäumungsprozess der Siliconmasse. Bei der Verarbeitung auf der Niederdruck-Zweikomponenten-Misch- und Dosieranlage wirkt sich weiterhin vorteilhaft aus, daß durch den dynamischen Vermischungsprozess die regelmäßig im Reaktionsgemisch in Form kleiner Luftblasen eingeschlossene Luft durch das rasch rotierende Mischorgan in der Siliconmasse feinstverteilt wird. Diese mikroverteilte Luft dient als Keimbildner für das Auslösen der Schaumbildung. Es wird somit im Ergebnis ein Siliconschaum von außerordentlicher Feinporigkeit und Gleichheit der Poren erhalten. Die genannte Keimbildung führt zu einem weichelastischen Siliconschaum von äußerst niedriger Rohdichte, die unter 0,2 g/cm³ liegt.

Die vorgenannten Effekte, nämlich hohe Fliehkräfte (enger räumlicher Kontakt der Moleküle bzw. optimale Vermischung), partielle Erwärmung des Mischgutes (Kickerfunktion der Reaktionsbildung bei Raumtemperatur) und Nukleierung der Siliconmasse (durch die Mikrofeinstverteilung der Luft im Mischgut) führen zu einer bisher nicht erreichbaren Qualität der Siliconschaumstoffdichtung, die selbst höchsten Anforderungen genügt. Der nach dem erfindungsgemäßen Verfahren hergestellte Silicon-Dichtungsschaum zeichnet sich demgemäß vor allem durch mikrofeine Zellporen bei gleichmäßiger Form und Größe der Zellen, durch hohe Geschlossenzelligkeit und damit hohes Abdichtverhalten, durch hohe mechanische Festigkeit, verbesserte Chemikalienbeständigkeit aufgrund der optimalen Vermischung und des optimalen Reaktionsablaufs, durch optimale Rückfederungseigenschaften bei hoher Weichheit aufgrund der Nukleierung sowie durch vollständige Nutzung des chemischen Treibmittels (Wasserstoff) aus. Durch fast vollständige Nutzung des Wasserstoffs entsteht ein praktisch alterungsfreier Siliconschaum, der nicht zur Versprödung neigt.

Die vorgenannten vorteilhaften Eigenschaften des erfindungsgemäß hergestellten Silicon-Dichtungsschaumstoffes ergeben sich einerseits aus der genannten Verarbeitungstechnik unter Verwendung der Niederdruck-Zweikomponenten-Misch- und Dosieranlage und andererseits aus dem hierbei zum Einsatz kommenden System der aufschäumbaren Siliconmasse. Die Zugabe von mindestens 0,05 Gew.-% Wasser bei gleichzeitiger Beschränkung des Wassergehaltes auf 2,0 Gew.-% (bezogen auf die Menge an Silicon-Polymer) führt dazu, daß beim Ausschäumen der Siliconmasse das Wasserstoffsiloxan praktisch vollständig zur Reaktion gebracht wird, so daß sich ein hoher Wasserstoff-Treibeffekt einstellt und die Nachreaktion mit den schädlichen Auswirkungen auf die Qualität des Silicon-Dichtungsschaumstoffes unterdrückt wird. Die Erhöhung des Treibeffektes bietet dabei die Möglichkeit, die Wasserstoffsiloxan-Konzentration in der Siliconmasse zu reduzieren. Mit dem erfindungsgemäßen Verfahren läßt sich somit bei Raumtemperatur eine praktisch klebfreie Verfestigung des Siliconschaumes schon nach nur wenigen Minuten erreichen.

Die erfindungsgemäß eingesetzte Siliconmasse ist zweckmäßig frei von organischen Lösungsmitteln. Durch die Wasserzugabe und den damit bewirkten zusätzlichen Treibeffekt erreicht der Schaum eine Volumengröße, die, falls erwünscht, bis an die Grenze der Dehnfähigkeit der Silicon-Polymere (300 bis 600 %) reichen kann. Der Wassergehalt bestimmt demgemäß den Weichheitsgrad des Silicon-Dichtschaumstoffes, wobei dieser mit zunehmendem Wassergehalt weicher wird. Eine Begrenzung des Wassergehaltes auf 2,0 Gew.-% ist im Hinblick auf die geforderten Eigenschaften, insbesondere das geforderte hohe Rückfederungsvermögen des Silicon-Dichtschaumstoffes erforderlich.

Wie erwähnt, besteht die bei dem erfindungsgemäßen Verfahren als Komponente A verwendete Siliconmasse aus einem additionsvernetzenden Silicon-Polymer mit mindestens zwei Vinylgruppen im Molekül, einem hochaktiven Platinkatalysator sowie ggf. den üblichen Zusatzstoffen, wobei als Vernetzerkomponente B Hydrogensiloxan und Wasser als zusätzliches Vernetzungs- und Treibmittel zugesetzt werden. Als Zusatzstoffe kommen vor allem, einzeln oder in Kombination, in Betracht:
Füll-, Verstärkungs- und Verdickungsmittel, Pigmente, Haftverbesserungsmittel und Mittel zur Erhöhung der mechanischen Festigkeit des Siliconschaumes, Alterungsmittel. Vorzugsweise wird der Siliconmasse ein mineralisches Füllmittel, wie vor allem Quarzmehl, zugesetzt, vorzugsweise in einem Anteil von 10 bis 50 Gew.-%. Als Verstärkungsmittel lassen sich auch organische oder anorganische Fasern, als Pigment z.B. Ruß, einsetzen. Als Haftverbesserungsmittel, die die Haftung des Siliconschaumes am Untergrund verbessern, sind Silane einsetzbar, als Alterungsschutzmittel z.B. Eisen- und Titanoxide. Im Silicon-Polymer gelöstes Vinylsiloxanharz bewirkt eine günstige Verstärkung des Schaumstoffzellgerüstes.

Die eingesetzte Siliconmasse ist vor ihrer Verschäumung fließfähig, wobei sich ihre Viskosität durch Zugabe von Verdickungsmitteln, z.B. pyrogene Kieselsäure, beeinflussen läßt.

Im folgenden wird ein Beispiel für die Herstellung eines weich-elastischen Silicon-Dichtungsschaumes angegeben, der sich bei dem erfindungsgemäßen Verfahren für die Herstellung von Deckel-, Gehäusedichtungen mit Vorteil einsetzen läßt:

Eine Komponente A, bestehend aus einem Gemisch von
100 g Silicon-Polymer mit mindestens zwei Vinylgruppen, ggf. mit darin gelösten Vinylsiloxanharz
0,2 g Edelmetallkatalysator (hochaktiver organischer Platinkomplex)
2 g pyrogene Kieselsäure (als Verdickungs- bzw. Thixotropierungsmittel)
1 g Rußpigmente
1 g Wasser
20 g Quarzmehl (Füllstoff)
wird mit der Vernetzerkomponente B, bestehend aus
5 g Wasserstoffsiloxan (SiH)
im Mischkopf der Niederdruck-Zweikomponenten-Misch- und Dosieranlage zusammengebracht, gemischt und dosiert auf den Sitz der herzustellenden Deckel- oder Gehäusedichtung aufgebracht und hier ohne Wärmezufuhr zur Aufschäumung gebracht. Bereits nach wenigen Minuten ist der sich bildende Silicon-Weichschaumstoff soweit verfestigt, daß er eine klebfreie Oberfläche hat. Der sich bildende Silicon-Dichtungsschaumstoff weist die obengenannten vorteilhaften Eigenschaften auf.

Die Niederdruck-Zweikomponenten-Misch- und Dosieranlage kann von bekannter Ausführung sein, wie sie für das Herstellen von Polyurethan-Schaumstoffdichtungen in situ gebräuchlich ist. Sie weist einen Mischkopf mit einem axial durchgehenden, strömungsgünstig gestalteten Mischkanal auf, in dessen Achse sich ein mit hoher Drehgeschwindigkeit antreibbares stabförmiges Mischorgan bekannter Art befindet. Dabei weist der Mischkanal einen solch engen Durchmesser auf, daß der Spalt zwischen dem Umfang des Mischorganes und der Wandung des Mischkanals 0,5 bis 3 mm beträgt.

Es versteht sich, daß in der Siliconmasse (Komponente A) auch andere Zusatzstoffe bekannter Art und auch Zusatzstoffe in abweichenden Mengenanteilen enthalten sein können, und daß auch die Anteile an Silicon-Polymer, Edelmetallkatalysator, Wasserstoffsiloxan und freiem Wasser je nach Verfahrensdurchführung und gewünschtem Verfahrensergebnis unterschiedlich sein können. Die obere Grenze des Wassergehaltes ist variabel und richtet sich vor allem nach der jeweiligen Rezeptur der zu verschäumenden Siliconmasse. Der Wassergehalt sollte in seiner oberen Grenze so eingestellt werden, daß sich das zugesetzte Wasser noch homogen in die Schaumstoff-Reaktionsmasse einfügen läßt. In jedem Fall liegt der Wasseranteil nicht höher als 2 Gew.-%, bezogen auf die Menge an Silicon-Polymer.

## Patentansprüche

1. Verfahren zum Herstellen eines feinporigen, weichelastischen Silicon-Dichtungsschaumes mit hohem Rückfederungsvermögen für Deckel- und Gehäusedichtungen durch Vermischen einer Komponente A, bestehend aus
- einem Silicon-Polymer mit mindestens zwei Vinylgruppen im Molekül,
- einem hochaktiven organischen Platinkomplex als Katalysator,
- sowie ggf. weiteren Zusätzen (einzeln oder in Kombination), wie z.B. Füll-, Verstärkungs-, Verdickungs-, Haftverbesserungs- und Alterungsschutzmitteln sowie Farbpigmenten,
und einer aus Wasserstoffsiloxan bestehenden Vernetzerkomponente B, wobei das mit einem Wasserzusatz in einer Menge von mindestens 0,05 Gew.-%, bezogen auf die Menge an Silicon-Polymer, versehene Reaktionsgemisch im Freiverschäumungsverfahren in situ ohne Wärmezufuhr zur Aufschäumung gebracht wird, **dadurch gekennzeichnet, daß** bei Begrenzung des Wasseranteils auf höchstens 2 Gew.-%, bezogen auf die Menge an Silicon-Polymer, das aus den Komponenten A und B bestehende Reaktionsgemisch im Mischkopf einer Niederdruck-Zweikomponenten-Misch- und Dosieranlage bei einer Drehzahl von 3000 bis 8000 U/min. des angetriebenen Mischorganes durchgeführt wird, wobei der axiale Mischkanal im Mischkopf der Niederdruck-Zweikomponenten-Misch- und Dosieranlage so eingestellt wird, daß der Spalt zwischen der Kanalwandung und dem axial im Mischkanal angeordneten rotierenden Mischorgan 0,5 bis 3 mm beträgt.

2. Verfahren nach Anspruch 1, **dadurch gekennzeichnet, daß** der die Komponente A bildenden Siliconmasse zur Verstärkung des Schaumstoffzellgerüstes gelöstes Vinylsiloxanharz zugesetzt wird.

3. Verfahren nach Anspruch 1 oder 2, **dadurch gekennzeichnet, daß** der die Komponente A bildenden Siliconmasse als Verdickungsmittel pyrogene Kieselsäure zugesetzt wird.

4. Verfahren nach einem der Ansprüche 1 bis 3, **dadurch gekennzeichnet, daß** die die Komponente A bildende Siliconmasse als Füllstoff Quarzmehl enthält, vorzugsweise in einem Anteil von 10 bis 50 Gew.-%.

5. Verfahren nach einem der Ansprüche 1 bis 4, **dadurch gekennzeichnet, daß** für die Komponente A eine lösungsmittelfreie Siliconmasse eingesetzt wird.

6. Verfahren nach einem der Ansprüche 1 bis 5, **dadurch gekennzeichnet, daß** eine mit Fasern verstärkte Siliconmasse eingesetzt wird.

## Claims

1. A method of producing a fine pored, flexible silicone sealant foam with a high spring-back capacity for cover- and housing seals, by mixing a component A, consisting of
- a silicone polymer with at least two vinyl groups in the molecule,
- a highly active organic platinum complex as a catalyst,
- and optionally other additives (individually or in combination), such as fillers, reinforcing-, thickening-, adhesion-improving- and anti-ageing agents, and coloured pigments,
and a crosslinking component B, consisting of hydrogen siloxane, wherein the reaction mixture, which is provided with added water in an amount of at least 0.05 weight % based on the amount of silicone polymer, is placed in situ for foaming by the free-foaming process without the supply of heat, characterised in that the reaction mixture consisting of components A and B is fed through in the mixing head of a low-pressure two-component mixing and metering installation, with restriction of the water content to a maximum of 2 weight % based on the amount of silicone polymer, at a rotational speed of 3000 to 8000 rpm of the driven mixing element, wherein the axial mixing channel in the mixing head of the low-pressure two-component mixing and metering installation is adjusted so that the gap between the channel wall and the rotating mixing element disposed axially in the mixing channel is 0.5 to 3 mm.

2. A method according to claim 1, characterised in that dissolved vinyl siloxane resin is added to the silicone material forming component A for reinforcement of the foamed material cell framework.

3. A method according to claim 1 or 2, characterised in that pyrogenic hydrated silica is added as a thickening agent to the silicone material forming component A.

4. A method according to any one of claims 1 to 3, characterised in that the silicone material forming component A contains quartz powder as a filler, preferably in a proportion of 10 to 50 weight %.

5. A method according to any one of claims 1 to 4, characterised in that a solvent-free silicone material is used for component A.

6. A method according to any one of claims 1 to 5, characterised in that a silicone material reinforced with fibres is used.

## Revendications

1. Procédé de fabrication d'une mousse d'étanchéité au silicone, élastique souple, à pores fins, présentant un haut pouvoir de détente pour des garnitures d'étanchéité de couvercles et de boîtiers, par mélange d'un composant A, constitué
- d'un polymère de silicone avec au moins deux groupes vinyle dans la molécule,
- d'un complexe de platine organique, très actif, comme catalyseur,
- ainsi qu'éventuellement d'autres additifs (isolés ou en combinaison), tels que des charges, des substances de renfort, des épaississants, des agents améliorant l'adhérence et des stabilisants ainsi que des pigments colorés,
et d'un composant de réticulation B, constitué de siloxane d'hydrogène, le mélange de réaction additionné d'eau à raison d'au moins 0,05 % en poids par rapport à la quantité de polymère de silicone, étant expansé sur le site, sans apport de chaleur, par procédé d'expansion à l'air libre, caractérisé en ce qu'en limitant la proportion d'eau à 2 % en poids au maximum par rapport à la quantité de polymère de silicone, le mélange de réaction, constitué des composants A et B, est réalisé dans la tête de malaxage d'une installation de malaxage de deux composants à basse pression et de dosage, à une vitesse comprise entre 3 000 et 8 000 tours/min de l'organe de malaxage entraîné, le canal de malaxage axial dans la tête de malaxage de l'installation de malaxage de deux composants à basse pression et de dosage, étant réglé de manière que la fente comprise entre la paroi du canal et l'organe de malaxage tournant axialement dans le canal de malaxage, est comprise entre 0,5 et 3 mm.

2. Procédé selon la revendication 1, caractérisé en ce que la masse de silicone, formant le composant A, est additionnée de résine de siloxane de vinyle dissoute, pour renforcer l'armature cellulaire de la mousse.

3. Procédé selon les revendications 1 ou 2, caractérisé en ce que la masse de silicone, formant le composant A, est additionnée d'acide silicique pyrogène servant d'épaississant.

4. Procédé selon l'une des revendications 1 à 3, caractérisé en ce que la masse de silicone, formant le composant A, contient comme charge de la poudre de quartz, de préférence à raison de 10 à 50 % en poids.

5. Procédé selon l'une des revendications 1 à 4, caractérisé en ce que pour le composant A on utilise une masse de silicone ne contenant pas de solvant.

6. Procédé selon l'une des revendications 1 à 5, caractérisé en ce qu'on utilise une masse de silicone renforcée aux fibres.
